# EUROPEAN PATENT SPECIFICATION

(11) **EP 3 405 529 B1**
(45) Date of publication and mention of the grant of the patent: **21.10.2020**
(21) Application number: 17701092.3
(22) Date of filing: 17.01.2017
(51) Int. Cl.: C09D 5/14, C09D 5/02, C08K 5/092, C08K 3/22

(54) **COATING COMPOSITION WITH ANTIMICROBIAL AND ANTISALINE ACTIVITY, AND PROCESS FOR THE PREPARATION THEREOF**
BESCHICHTUNGSZUSAMMENSETZUNG MIT ANTIMIKROBIELLER UND ANTISALINISCHER AKTIVITÄT UND VERFAHREN ZUR HERSTELLUNG DAVON
COMPOSITION DE REVÊTEMENT PRÉSENTANT UNE ACTIVITÉ ANTIMICROBIENNE ET ANTI-SEL, ET SON PROCÉDÉ DE PRÉPARATION

(30) Priority: 18.01.2016 IT UB20160259
(43) Date of publication of application: 28.11.2018
(73) Proprietor: Università degli Studi di Roma "La Sapienza", 00185 Roma (IT); Università Degli Studi Di Perugia, 06123 Perugia (IT)
(72) Inventor: BRACCIALE, Maria Paola, I-00155 Roma (IT); BROGGI, Alessandra, I-00131 Roma (IT); CHANDRAIAHGARI, Chandrakanth Reddy, I-00185 Roma (IT); DE BELLIS, Giovanni, I-00043 Ciampino (IT); SANTARELLI, Maria Laura, I-00151 Roma (IT); SARTO, Maria Sabrina, I-00142 Roma (IT); UCCELLETTI, Daniela, I-00146 Roma (IT); ZANNI, Elena, I-00184 Roma (IT); MARROCCHI, Assunta, I-06123 Perugia (IT)
(74) Representative: Trupiano, Federica
(86) International application number: PCT/EP2017/050890
(87) International publication number: WO 2017/125388

(56) References cited:
- WO-A1-2014/209222
- US-A1- 2007 116 987
- US-A1- 2009 145 327

## Description

### SUMMARY OF THE INVENTION

The present invention refers to the formulation of a coating composition in the form of an aqueous suspension based on zinc oxide micro- and/or nano-sticks and phosphocitric acid with combined antimicrobial and inhibitory activity towards saline crystallization, its application for the treatment of various surfaces, and a process for its preparation. The composition of the present invention is particularly suited to be used for the material durability, in particular of porous materials, such as e.g. plasters, mortars, tuff, concrete, wood, etc.

### TECHNICAL BACKGROUND

Known inhibitors of saline crystallization, which belong to the class of polycarboxylic acids, in particular phosphocitric acid (AFC), can inhibit and/or retard the growth of salt crystals within the porous network of the material on which they are used, thus reducing the structural damage coming from crystallization pressures. However, it is disadvantageous to use polycarboxylic acid solutions, in particular of phosphocitric acid (AFC), because these stimulate the bacterial growth. As a matter of fact phosphocitric acid, in the solution form, provides the bacteria with important precursors for the energy production (ATP) and, at the same time, its presence originates a pH only slightly acid, which is not sufficient to inhibit the bacterial proliferation. Microorganism growth on construction or pictorial surfaces is as well undesirable with respect to the formation of salt crystals, since the microorganisms are usually responsible for stains, bad smells and surface degradation. The types of microorganisms usually proliferating on such surfaces are mainly staphylococci, actinomycetes and bacteria of the *Pseudomonas* genus, in addition to fungi. In particular, staphylococci are Gram-positive cocci which are widely diffused in nature. They are found in floor dust, on walls and on a great variety of manufactured products. In addition also the actinomycetes, aerobic Gram-positive, mainly saprophytes morphologically similar to filamentous mycetes, cause the same problems. Among Gram-negative bacteria the most commonly found is the *Pseudomonas aeruginosa,* which can be encountered in all wet environments and which is characterized by high adaptation ability thanks to its moderate nutritional needs.

The saline crystallization damage is recognized as one of the main causes of the building material degradation, and is particularly relevant in historical buildings and archaeological sites. The saline crystallization degradation is usually recognized as a process which depends on atmospheric temperature and humidity, leading to the presence of salt crystals on the surfaces of porous materials (efflorescences), which are often highly visible and extended, or leading to various mechanical stresses induced by the growth of the salt crystals deposited within material pores (sub-efflorescences or crypto-efflorescences), which can endanger the structural safety of buildings as well as cause diffused loss of surface material, e.g. scaling and detachments. There are often no suitable prevention or mitigation strategies, mainly because it usually not possible to remove the source of salts and/or to control the microclimate environment. Generally, the commonly used prevention or mitigation methods are desalinization methods and include: washings with water and application of surfactant packs by employing highly absorbent materials such as clays or cellulose pulp; chemical cleaning with, e.g., hydrofluoric acid; extraction of the salt with barium compounds; electromigration; vacuum extraction or with pressurized water; creation of chemical barriers and use of a series of consolidating agents and surface coatings, such as polymer water repellents which passivate the material surface.

The most representative chemical additives investigated so far to mitigate and/or stop the damage caused by crystallization pressures in building materials belong to the class of alkaline ferrocyanides (potassium or sodium ferrocyanide), surfactants (sodium dodecylsulfate and ammonium cetyl dimethyl benzyl chloride) and phosphorous-containing species (Diethylenetriamine penta (methylphosphonic acid) and phosphocitric acid).

The patent literature referring to the use of crystallization inhibitors to control the damage caused by crystallization pressures developing within the capillary network of the building materials, is lacking.

The Chinese Patent CN101921135 B describes a method for the desalinization of stone materials, by using a potassium ferrocyanide and an aminotrimethylenephosphonic acid at high concentration (0.2-0.5 M) as inhibitors for alkaline metal chlorides and alkaline metal sulfates, respectively.

The Chinese Patent CN 101177351 describes, on the other hand, a method for the removal of salts by means of a treatment with a fluid with pH=7.5 and supported on a cellulose buffer through substrates which are permeable to salts. This method requires a quite complex system to remove and clean the porous surfaces from salts, and its effectiveness, even though acceptable, depends on the treatment time, the environmental conditions and is expensive.

The patent documents referring to the use of crystallization inhibitors or desalinization actions, in general, refer to applications for the purification of materials coming from sea water for the use in constructions (e.g. the use of marine sands), applications in the medical field (e.g. calculus treatment), treatment of sewages, oil installations, oils, fats and pesticides. Accordingly, they refer to a technical field which is far with respect to the application scope of the present invention.

Patents US 4753652, DE 102005018887, US 20080194042 and US 1989-321249 refer to products based on phosphocitric acid (AFC) or salts thereof (phosphocitrates), which can be used for applications in the medical field as anti-calcification agents. U.S. Patent US5503840 refers to the formulation of an antimicrobial powder essentially based on at least one of the following metal oxides: titanium dioxide, zinc oxide or barium sulfate, then covered with silver and in some cases also with copper derivatives. The particle size of zinc oxide is comprised between 0.1 µm and 3 µm. In particular, the composition is based on coated oxide particles. In the case of zinc oxide, these particles are covered with silver, silica, alumina in an organic solvent.

Patent CN103054129 refers to the production of zinc oxide nanoparticles with antimicrobial properties with a size comprised in the range from 8 nm to 150 nm. These particles are obtained by means of hydrothermal treatment at high temperatures (250 ∼ 600 °C) for applications in the field of food industry, in particular as additive for beverages based on fruit juices.

Patent JPH09263466 refers to a titanium-based product which can contain zinc oxide or other metal oxides. Such product can be directly applied or sprayed to surfaces and has antimicrobial activity.

International Patent Application WO 2014/209222 refers to the formulation of an antimicrobial and antiviral coating based on a suspension (usually aqueous) of zinc pyrithione (IUPAC name: Bis(2-pyridylthio)zinc 1,1'-dioxide) and zinc oxide particles having size comprised between 15 µm and 20 µm. The formulation is mainly used in the architecture/wall field, in the form of varnish as a coating with antimicrobial and antiviral activities.

U.S. Patent Application US 2011/0070275 A1 refers to a generally water-based formulation containing a composite of zinc pyrithione (IUPAC name: Bis(2-pyridylthio)zinc 1,1'-dioxide) and ZnO, used in anti-dandruff shampoos but also in coatings for boat hulls.

Patent US5518774 refers to a water-based formulation for coatings and varnishes, which provides the substrate on which it is applied with a combination of "in-can" preservation as well as antimicrobial effectiveness. The composition usually contains water, a base-medium (such as for example the polymer latex used in varnishes), a zinc compound (e.g. ZnO) and a pyrithione salt (usually sodium pyrithione named as N-oxide-2-thiolpyridine sodium salt).

Patent CN102119127 refers to the preparation of zinc oxide nanoparticles as aqueous suspension or in the form of powder and their use in cosmetic preparations as stabilizers for plastics, varnishes, coatings and as antimicrobial active agents. These particles have average diameter between 2 and 500 nm.

Patent US/20070116987 relates to the use of nanosized metal and metal oxide particles as biocides in coatings for roofing products. Those nanosized particles can be incorporated in the coatings and act as protectant against bacteria, fungi, mold, etc. The patent also describe the coating composition and the method for its application on roofing materials. The metal oxides are preferably Zinc or Copper.

In patent US2009/0145327 a composition capable of increasing the fading resistance of a coating material which preferably comprise nano-sized halogenated benzonitrile and nano-sized zinc oxide is described. Those nano-sized components, having a biocide activity, are in particular in a dimension range between 10 and 300 nm. The method for reducing the fading of pigmented coating composition containing the nano-sized components is also disclosed.

WO2014/209222 describe a coating composition comprising zinc pyrithione and zinc oxide as antimicrobial agents. Preferably, the coating is an architectural coating, such as paint. The composition can also include silver, in the form of organic or inorganic salts. The manufacturing process for the preparation of said composition as well as its use are also claimed.

It is known from the herein cited patent documents that zinc oxide micro and nanoparticles have antimicrobial activity, whereas known saline crystallization inhibitors have environmental polluting (ferrocyanides) and toxicity properties for humans and the Earth/aquatic environment (phosphonate). Moreover, the traditional desalinization techniques are sometimes ineffective and/or too expensive, because they are not suitable for long-term preservation and treatment of big surfaces.

### OBJECTS OF THE INVENTION

For these reasons in the state of the art there is the need of new coating compositions able to be efficiently used for the prevention of damages caused by the crystallization within porous materials, in particular coating compositions with inhibitory activity of saline crystallization combined with antimicrobial activity, which are active at low concentrations and non-toxic for environment and humans.

For the above mentioned reasons, the optimization of a coating composition with combined antimicrobial and inhibitory activities towards the saline crystallization is required. Another object of the present invention is to provide a process for the preparation of such composition which turns out to be simple and inexpensive. These objects are achieved by the composition according to claim 1 and by the process defined in claim 4.

### DESCRIPTION OF THE INVENTION

The coating composition according to the present invention is an aqueous suspension based on phosphocitric acid and zinc oxide micro- and/or nano-sticks.

Preferably, the coating composition of the present invention comprises a concentration of 50 µg/ml - 20 mg/ml of zinc oxide (ZnO) micro-sticks and/or 0.1 µg/ml-2 mg/ml of zinc oxide (ZnO) nano-sticks in an aqueous solution of phosphocitric acid having concentration of phosphocitric acid comprised between 10⁻¹⁰ M and 10³ M.

More preferably, the composition has concentration comprised between 100 µg/ml and 10 mg/ml of zinc oxide micro-sticks and/or from 0.5 µg/ml and 1 mg of zinc oxide nano-sticks in an aqueous solution of phosphocitric acid (AFC), the latter containing phosphocitric acid at concentration comprised between 10⁻⁶ M and 10⁻³ M.

In the composition of the present invention, the size of the ZnO micro-sticks are comprised between 100 nm and 1 µm in diameter and 1 µm and 10 µm in length, preferably between 200 nm and 500 nm in diameter and 2 µm and 5 µm in length, whereas the ZnO nano-sticks have size between 15 nm and 100 nm in diameter and 100 nm and 5 µm in length, preferably between 25 nm and 70 nm in diameter and 300 nm and 3 µm in length.

Preferably, the micro- and nano-sticks used according to the present invention for the preparation of the coating composition are micro- and nano-sticks named in the literature also as "microrods" and "nanorods".

In addition, the present invention refers to a process for the preparation of the above mentioned coating composition. The process comprises preparing a suspension by dispersing powders of zinc oxide micro-sticks and/or zinc oxide nano-sticks in an aqueous solution containing phosphocitric acid.

According to the present invention, the preferred process for the preparation of a coating composition in the form of aqueous suspension is obtained by dispersing 5 mg -2 g of zinc oxide micro-sticks and/or 10 µg-200 mg of zinc oxide nano-sticks in 100 ml of an aqueous solution containing phosphocitric acid, the latter at concentration comprised between 10⁻¹⁰ M-10³ M.

All the indicated amounts of each component of the composition according to the invention refer to the total weight of the suspension of the coating composition.

In a variation of the present invention, the aqueous solution containing the phosphocitric acid can be prepared according to the known synthesis method reported in the literature: W.P. Tew, C. Mahle, J. Benavides, J. E. Howard, A. L. Lehninger, Synthesis and Characterization of Phosphocitric Acid, a Potent Inhibitor of Hydroxylapatite Crystal Growth, Biochemistry 1980, 19, 1983-1988. Such method allows to obtain a highly concentrated aqueous solution of phosphocitric acid, at concentration comprised between 1 M and 1.5 M, which is diluted with distilled water to obtain a solution at the desired concentration.

The process for the preparation of a coating composition according to the present invention can be carried out at temperature comprised between 4 to 20°C and preferably between 10 to 20°C. The process can include optional sonication and centrifugation steps to avoid further sedimentation and in order to produce a homogeneous suspension.

In addition the present invention refers to a process, in particular a hydrothermal synthesis, for the preparation of ZnO micro-sticks. Such process is simple and inexpensive and comprises the following basic steps:
a) preparing a homogeneous growth solution of at least one zinc salt in an organic solvent,
b) keeping the homogeneous solution obtained in the above mentioned step a) in a pre-heated furnace at temperature comprised between 100°C and 500°C, preferably between 200°C and 400°C, for a period of time sufficient to form the ZnO micro-sticks, and
c) optionally purifying, filtering and drying the product obtained in the above mentioned step b).

Step a) of the hydrothermal synthesis for the preparation of ZnO micro-sticks is preferably carried out at room temperature until obtaining a homogeneous solution. The time sufficient for the formation of the ZnO micro-sticks in step b) of the process of the present invention is advantageously comprised between 2 h and 36 h, preferably between 8 h and 18 h. Step c) of the process for the preparation of the ZnO micro-sticks includes optional procedures commonly known to one skilled in the field of the art.

The zinc salt used in step a) of the process for the preparation of the ZnO micro-sticks can be selected for example from zinc nitrate hexahydrate or zinc acetate dihydrate. Similarly, also the organic solvent used in step a) of the hydrothermal synthesis according to the present invention can be selected for example from hexamethylenetetramine or other amine solvents with similar properties.

In addition, the present invention refers to a method for the preparation of ZnO nano-sticks by thermal decomposition, which includes the following steps:
a) contacting at least one zinc salt with aluminum;
b) placing the product obtained in step a) into a sealed steel container, and
c) placing said steel container prepared in step b) into a hot furnace having temperature comprised between 100°C and 500°C and keeping it in the hot furnace for a period of time sufficient to form the ZnO nano-sticks.

In step a) of the thermal decomposition according to the present invention, at least one zinc salt can be contacted with aluminum in any way, e.g. it is possible to place the zinc salt (or the zinc salts) between two aluminum foils or wrap it with an aluminum foil. The presence of aluminum in contact with the zinc salt is necessary to aid the growth of the nanostructures. Accordingly, the way of contacting at least one zinc salt with aluminum is not limited for the process of preparation of ZnO nano-sticks according to the present invention.

In step c) of the thermal decomposition for the preparation of the zinc oxide nano-sticks according to the present invention, the steel container containing the zinc salt and aluminum is kept into the hot furnace for a period of time comprised between 2 h and 36 h.

The coating composition according to the present invention is specifically active for metal and alkaline-earth metal salts and active on porous substrates (macro, meso and micro) of carbonate, silica and cellulose origins.

The main advantages of the coating composition of the present invention are its ecocompatibility and its simple application on substrates. The composition can be applied on different substrates with the techniques known to a person skilled in the technical field concerning coatings. Some non-limitative examples and ways of application of the composition of the present invention are the spin coating, the dip coating and the spray coating.

The present invention provides a coating composition having high inhibitory capacity towards saline crystallization combined with significant antimicrobial power.

The coating composition according to the present invention has several other advantages, e.g.:
- it is ecocompatible, since it is soluble in water and/or alcohol, in accordance with the control of the emission of volatile organic compounds and the safety during the utilization;
- it is non-invasive;
- it entails low production costs;
- it is easily applicable on different substrates by known methods, and
- it is active at low concentration.

The coating composition according to the present invention is advantageously applicable in the field of construction industry. Other main applicative fields are boat products and materials, the maintenance of road surfaces and the preservation of Cultural Heritage.

### BRIEF DESCRIPTION OF THE FIGURES

Further characteristics and advantages of the present invention will become more evident from the following examples, by way of example and non-limitative, with reference to the appended figures, wherein:

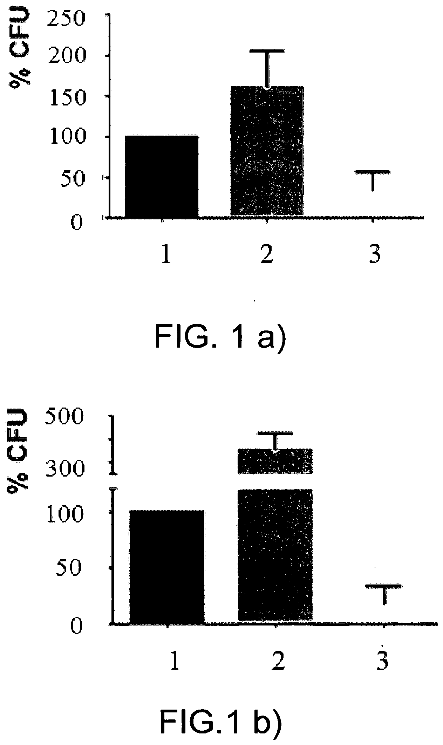

- Figures 1a) and 1b) show two histograms representing the colony-forming units (% CFU) detected for three types of treatments on bricks contaminated with two different types of bacteria: Staphylococcus aureus (Figure a) and Pseudomonas aeruginosa (Figure 1b). The three treatment types are: 1=no treatment; 2=treatment with phosphocitric acid (AFC) and 3=treatment with the coating composition according to an embodiment of the present invention containing a suspension of phosphocitric acid in combination with ZnO micro-sticks.

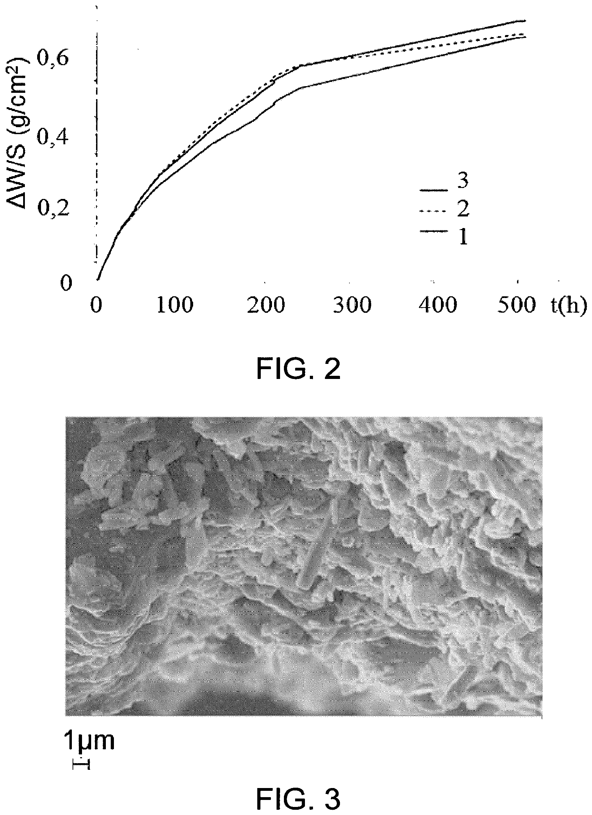

- Figure 2 represents the evaporation curve of water as a function of time (hours) to evaluate the inhibitory efficiency of the coating composition according to the present invention on salt formation. The three curves reported in Figure 2 refer to three treatment types on bricks: 1=no treatment; 2=treatment with phosphocitric acid (AFC) and 3=treatment with the coating composition according to an embodiment of the present invention containing a suspension of phosphocitric acid in combination with ZnO micro-sticks. As it can be noticed from Figure 2. the high efficiency of the product as an antisaline is demonstrated. Ultimately, the AFC action is not antagonist with respect to that of ZnO micro-sticks and the formulation object of the present invention has both saline inhibition and antimicrobial activity without decrease or annihilation of their single actions.
- Figure 3 is a FE-SEM (Field Emission Scanning Microscopy) image of the surface of a brick coated with the composition according to the present invention, containing a suspension of phosphocitric acid and ZnO micro-sticks.

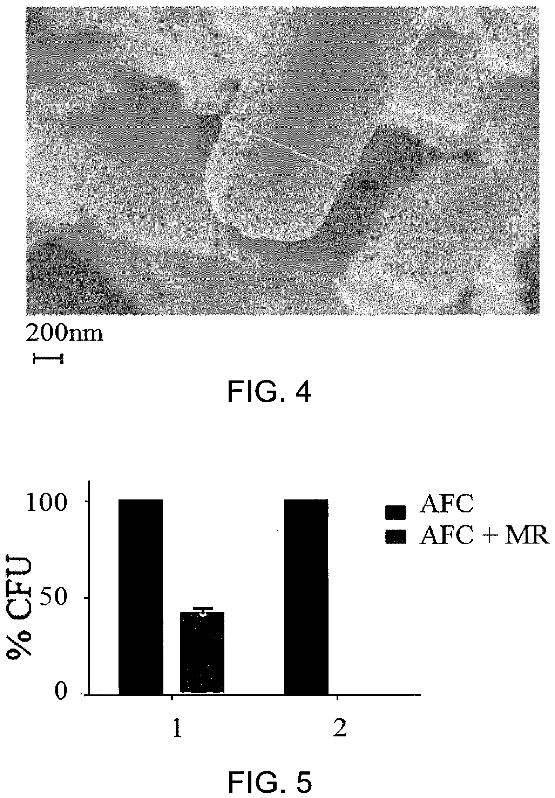

- Figure 4 is a FE-SEM image of the cut surface of the sample of a brick treated with the coating composition according to the present invention, containing a suspension of phosphocitric acid and ZnO micro-sticks.
- Figure 5 is a histogram to evaluate the antimicrobial activity of the composition of the present invention compared to an aqueous solution of phosphocitric acid. In particular, Figure 5 represents the colony-forming units (% CFU) detected for two bacteria types (1= *Pseudomonas aeruginosa* 2=*Staphylococcus aureus*) used to inoculate an aqueous solution of phosphocitric acid and an aqueous suspension containing phosphocitric acid and ZnO micro-sticks.

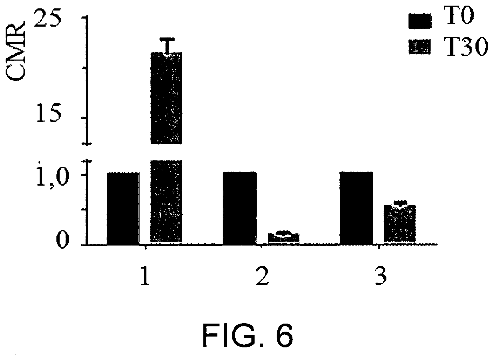

- Figure 6 shows a histogram to evaluate the shelf life of the coating composition of the present invention by evaluating the relative microbial load (RML), during thirty days. The histogram denotes the relative microbial load measured on brick samples treated with phosphocitric acid (1) and with the coating composition according to the present invention comprising an aqueous suspension formed by an aqueous solution of phosphocitric acid and ZnO micro-sticks (2) or with the coating composition according to the present invention comprising an aqueous suspension formed by an aqueous solution of phosphocitric acid and ZnO nano-sticks (3).

### EXPERIMENTAL SECTION

### Example 1

### Preparation of an aqueous solution based on phosphocitric acid (AFC)

AFC has been obtained in the form of highly concentrated aqueous solution (1-1.5 M) according to the synthesis process reported in the known literature: W.P. Tew, C. Mahle, J. Benavides, J. E. Howard, A. L. Lehninger, Synthesis and Characterization of Phosphocitric Acid, a Potent Inhibitor of Hydroxylapatite Crystal Growth, Biochemistry 1980, 19, 1983-1988. Such process essentially includes the following steps:
- reacting equimolar ratios of o-phenylene phosphorochloridate and triethyl citrate having concentration of 10⁻³ M in the presence of pyridine, and employing toluene as solvent, to form the protected o-phenylene phosphate ester of triethyl citrate;
- removing the phenylene protecting group by catalytic reduction with the H₂/PtO₂ system, carried out at ambient pressure as reported in the publication;
- removing the ethyl protecting groups in the presence of NaOH/CaCl₂, at the temperature of 4°C;
- isolating by filtration the calcium salts obtained after the hydrolytic removal of the protecting groups in the preceding step; and purifying on DEAE-cellulose to obtain the phosphocitrate anion and
- treating the latter on a Dowex strong cation-exchange resin.

The AFC aqueous solution (1-1.5 M), directly obtained by applying the process described by W.P. Tew, et al., has been diluted with distilled water to obtain a solution with concentration comprised in the range 10⁻³-10⁻⁶ M.

### Example 2

### Preparation of ZnO micro-sticks

The ZnO micro-sticks (microrods) have been prepared by means of a simple and economical advantageous hydrothermal technique. The method typically comprises the steps described in the following:
- preparing in a Pyrex beaker a water-based growth solution constituted by equimolar ratios of zinc nitrate hexahydrate and hexamethylenetetramine, which are dissolved in deionized water by magnetic stirring at 500 rpm for 30 min at room temperature, until obtaining a homogeneous solution;
- transferring the beaker containing the growth solution into a hot furnace at a temperature of about 300°C and keeping the beaker in the hot furnace for at least 3 hours;
- replacing the growth solution with deionized water a.r. and sonicating in bath to remove the white deposit stuck to the bottom of the beaker (which acts as substrate during the growth), constituted by ZnO micro-sticks;
- filtering under vacuum the obtained suspension after sonication, on filters constituted by nanoporous alumina membranes;
- drying the filtrate in a furnace at 120°C.
- obtaining ZnO micro-sticks by removing the filtered deposit from the porous alumina membrane.

### Example 3

### Preparation of ZnO nano-sticks

The ZnO nano-sticks (nanorods) have been produced by employing a thermal decomposition process. First of all zinc acetate dihydrate, which acts as synthesis precursor, has been placed between two aluminum foils which then have been placed into a sealed steel container. The so prepared steel container has been then placed into a pre-heated muffle furnace and kept at 300°C for 12 h. Therefore, the ZnO nano-sticks have been obtained in an aggregated form of porous foils.

### Example 4

### Preparation of an aqueous suspension based on phosphocitric acid (AFC) containing ZnO micro-sticks

Powders of ZnO micro-sticks (microrods) obtained as described in example 2 have been dispersed in aqueous solution containing phosphocitric acid prepared as described in example 1. The so obtained dispersion underwent a sonication with ultrasound amplitude of 70% for a period of time equal to 20 minutes (activity time of the processor in pulsed cycle 1 sec on-1 sec off), by maintaining the temperature of the suspension between 10°C and 20°C and preferably at 15°C, by means of a thermocryostat.

At the end of the sonication process, the obtained suspension has been quickly transferred into a 50 ml centrifuge tube, to avoid further sedimentation.

### Example 5

### Preparation of a coating composition comprising an aqueous suspension based on phosphocitric acid (AFC) containing ZnO nano-sticks

Powders of ZnO nano-sticks obtained as described in example 3 have been dispersed in an aqueous solution containing phosphocitric acid prepared as described in example 1. The sonication conditions of the so obtained dispersion correspond to those employed in example 4 for the preparation of the aqueous suspension based on AFC and ZnO micro-sticks.

At the end of the sonication process, the obtained suspension has been quickly transferred into a 50 ml centrifuge tube, to avoid further sedimentation. The so obtained product has been used as coating composition in tests described below.

### Antimicrobial and antisaline activity tests

The compositions according to the present invention have shown to be particularly effective against all the analyzed microorganisms, under the following three conditions:
1) in the form of biofilms directly on the building materials (e.g., brick): the substrate is treated with the coating composition in the form of suspension obtained as described in example 4 and then is contaminated with different bacterial species. The antimicrobial and antisaline efficiencies of the treatment are verified;
2) in aqueous suspension: the coating composition in the form of suspension according to the present invention obtained as described in example 4 is contaminated with different bacterial species. The antimicrobial and antisaline efficiencies of the treatment are verified.
3) in shelf-life tests: the retention of the antimicrobial capacity of the coating compositions obtained as described in examples 4 and 5 has been evaluated over time.

### Antimicrobial test on brick substrate

The coating composition obtained as described in example 4 has been applied on building bricks of commercial type.

Thereafter the treated brick surface has been contaminated with two different types of bacteria: Gram-positive, in particular *Staphylococcus aureus* and Gram-negative bacteria, in particular *Pseudomonas aeruginosa* bacteria.

For this purpose, an aqueous suspension of bacteria has been applied on both the untreated material and on the material treated with the solution containing the phosphocitric acid alone obtained as described in example 1, and with the coating composition of the present invention obtained as described in examples 4 and 5. The inoculated materials have been then incubated under ambient temperature and humidity for a defined period of time. After this time, the samples have been immersed into a buffer system and then stirred to remove the survived microorganisms. The tests have been carried out according to OECD guidelines, modified by the IS022196 regulation, to evaluate the efficiency of antimicrobial treatments on porous and non-porous materials. The number of colony-forming units present in the resulting suspension has been then determined by employing known standard techniques for the determination of the colony-forming units (% CFU). The survival of the single bacterial species on the untreated brick has been evaluated as 100% CFU (P value<0.05), against which the viabilities obtained on the treated bricks, as indicated in Figure 1, have been then correlated. A marked antimicrobial effect can be noticed exactly for the coating composition containing the suspension of ZnO micro- and/or nano-sticks object of the present invention.

### Antisaline test on brick substrate

The inhibitory efficiency of the coating composition of the present invention obtained as described in example 4 has been evaluated by means of crystallization experiments carried out under ambient conditions. The results obtained with this test are shown in Figure 2, wherein the values of weight loss of the water evaporated from the sample (expressed in grams) (ΔW) per unit surface S (cm²) are reported as a function of time (expressed in hours). The obtained results show, with respect to the Na₂SO4 crystallization, the efficiency of the coating composition according to the present invention in comparison with the untreated samples and the samples treated with an aqueous solution of phosphocitric acid obtained as described in example 1.

The behavior of the coating composition of the present invention results to be equal and not affected with respect to that of the inhibitory activity of phosphocitric acid, thus highlighting that the presence of ZnO micro-sticks does not affect the saline anti-crystallization efficiency of AFC as such.

### Microscopy analysis (FE-SEM) of the porous substrates treated with the coating composition of the present invention

By means of field emission scanning electron microscopy (FE-SEM) analysis, the coating obtained on the surfaces of bricks treated with the coating composition produced as described in example 4 has been evaluated. For this purpose, the samples have been covered with a thin chromium layer to avoid the build-up of static charges during the microscopy analyses. The results of the FE-SEM analyses are reported in Figures 3 and 4, showing the FE-SEM image of the cut surface of the samples treated with the coating composition obtained as described in example 4, wherein it is possible to note the penetration of the ZnO micro-sticks within the porous structure of the brick material.

### Antimicrobial test in aqueous suspension

Bacterial aqueous suspensions (*Pseudomonas aeruginosa* or *Staphylococcus aureus*) have been inoculated into both the phosphocitric acid (AFC) solution alone and into the coating composition of the present invention obtained as described in example 4. All the samples have been incubated under ambient temperature and humidity conditions for a defined period of time. After this time, the samples have been properly diluted and plated on solid medium to obtain an estimation of the survived bacteria by determining the colony-forming units (% CFU). The survival of the single bacterial species into the suspension containing the AFC has been evaluated as 100% CFU, against which the viabilities resulting from the coating composition of the present invention have been then correlated. The obtained results are reported on the histogram of Figure 5, representing the colony-forming units (% CFU) for the two types of bacteria (Pseudomonas aeruginosa (1) and Staphylococco aureus (2)) by using in each case the phosphocitric acid (AFC) solution and the coating composition obtained as described in example 4 (AFC + MR). The microbial load of each product (1, 2 and 3) is reported by considering the values obtained with the suspension of the AFC (1) as 100% (P value < 0.05). It can be observed the high antimicrobial effect of the coating composition of the present invention obtained as described in example 4 (AFC+MR), in particular in case of Gram-positive bacteria, i.e. Staphylococco aureus, wherein the bacterial mortality is 100% CFU, i.e. a complete inhibition of the growth of this type of bacterium is obtained.

### Shelf-life test

Shelf-life tests of the coating compositions according to the present invention obtained as described in examples 4 and 5 compared to the AFC solution obtained as described in example 1 have been performed for both short and long times, in order to verify the storage stability of the product.

The test has been carried out by monitoring the microbial load of the suspensions for a maximum of 30 days. During this period, the ZnO micro-sticks (ZnO-MR) and ZnO nano-sticks (ZnO-NR) maintained their antimicrobial properties and inhibited bacteria and fungi proliferation, even though the coating compositions of the present invention have been prepared without sterility and maintained under ambient temperature and humidity conditions.

Figure 6, by way of example, denotes in the histogram form the results obtained for the plate growth of the microorganisms present in the different aqueous suspensions analyzed at 0 days and 30 days. The anti-fungal effect of the coating composition of the present invention, wherein ZnO micro-sticks (2) are present, is evident, whereas in the case of the ZnO nano-sticks (3) the antimicrobial effect is evident. The difference in microbial quality and quantity of the different suspensions is due to environment and time variabilities, and to the non-sterility while preparing all the compositions. Figure 6 reports the data of the relative microbial load (RML), which have been calculated from the total bacterial load detected for the phosphocitric acid (AFC) solution (1) obtained as described in example 1, for the coating composition obtained as described in example 4 (2) and for the coating composition obtained ad described in example 5 (3). The vertical bars of the histogram depicted with T0 refer to the relative microbial load values at the beginning of the test, i.e. at the moment of the inoculation of the plate with products (1), (2) and (3) and, as a consequence, T0 values are depicted in the histogram as value 1 (P value<0.05) of relative microbial load. The vertical bars depicted as T30 refer to the relative microbial load values calculated from the total bacterial load values detected thirty days after the inoculation with respect to the values depicted as T0.

The tests performed with the coating compositions of the present invention demonstrate that the use of the combination of phosphocitric acid (AFC), ZnO micro-sticks and/or ZnO nano-sticks allows to obtain a coating composition for porous materials with high antimicrobial and antisaline activities.

## Claims

1. A coating composition with antimicrobial and antisaline activity in the form of an aqueous suspension, **characterized by** comprising micro- and/or nano-sticks of zinc oxide ZnO and phosphocitric acid.

2. The coating composition according to claim 1, **characterized by** comprising from 50 µg/ml to 20 mg/ml of ZnO micro-sticks and from 0.1 µg/ml to 2 mg/ml of ZnO nano-sticks and an aqueous solution of phosphocitric acid having concentration comprised between 10⁻¹⁰ M and 10³ M.

3. The coating composition according to claim 1, **characterized in that** the ZnO micro-sticks have size comprised between 100 nm and 1 µm in diameter and 1 µm and 10 µm in length, whereas the ZnO nano-sticks have size between 15 nm and 100 nm in diameter and 100 nm and 5 µm in length.

4. A process for the preparation of the coating composition according to claim 1, **characterized in that** an aqueous suspension is prepared by dispersing zinc oxide micro-sticks and/or zinc oxide nano-sticks in an aqueous solution containing phosphocitric acid.

5. The process according to claim 4, **characterized by** dispersing from 5 mg to 2 g of ZnO micro-sticks and/or from 10 µg to 200 mg of ZnO nano-sticks in 100 ml of aqueous solution containing phosphocitric acid at a concentration comprised between 10⁻¹⁰ M and 10³ M.

6. The process according to claim 4, **characterized in that** the dispersion of the micro-sticks and/or the nano-sticks in the aqueous solution of phosphocitric acid is carried out at a temperature comprised between 4-20°C.

7. Use of the composition according to claim 1 for the antimicrobial treatment of porous and non-porous materials.

8. Use of the composition according to claim 1 as inhibitor of the saline crystallization on surfaces of porous and non-porous materials.

## Patentansprüche

1. Beschichtungszusammensetzung mit antimikrobieller und antisalinischer Aktivität in der Form einer wässrigen Suspension, **dadurch gekennzeichnet, dass** diese Mikro- und/oder Nanosticks aus Zinkoxid ZnO und Phosphozitronensäure enhält.

2. Beschichtungszusammensetzung nach Anspruch 1, **dadurch gekennzeichnet, dass** diese 50 µg/ml bis 20 mg/ml ZnO-Mikrosticks und 0,1 µg/ml bis 2 mg/ml ZnO-Nanosticks und eine wässrige Lösung von Phosphozitronensäure mit einer Konzentration zwischen 10⁻¹⁰ M und 10³ M enthält.

3. Beschichtungszusammensetzung nach Anspruch 1, **dadurch gekennzeichnet, dass** die ZnO-Mikrosticks eine Größe im Durchmesser zwischen 100 nm und 1 µm und in der Länge zwischen 1 µm und 10 µm aufweisen, während die ZnO-Nanosticks eine Größe im Durchmesser zwischen 15 nm und 100 nm und in der Länge zwischen 100 nm und 5 µm aufweisen.

4. Verfahren zur Herstellung der Beschichtungszusammensetzung nach Anspruch 1, **dadurch gekennzeichnet, dass** eine wässrige Suspension durch Dispergieren von Zinkoxid-Mikrosticks und/oder Zinkoxid-Nanosticks in einer wässrigen Lösung, die Phosphozitronensäure enthält, hergestellt wird.

5. Verfahren nach Anspruch 4, **gekennzeichnet durch** Dispergieren von 5 mg bis 2 g ZnO-Mikrosticks und/oder von 10 µg bis 200 mg ZnO-Nanosticks in 100 ml wässriger Lösung, die Phosphozitronensäure in einer Konzentration zwischen 10⁻¹⁰ M und 10³ M enthält.

6. Verfahren nach Anspruch 4, **dadurch gekennzeichnet, dass** die Dispersion der Mikrosticks und/oder der Nanosticks in der wässrigen Lösung von Phosphozitronensäure bei einer Temperatur zwischen 4 und 20 °C durchgeführt wird.

7. Verwendung der Zusammensetzung nach Anspruch 1 zur antimikrobiellen Behandlung von porösen und nicht porösen Materialien.

8. Verwendung der Zusammensetzung nach Anspruch 1 als Inhibitor der Salzkristallisation auf Oberflächen poröser und nicht poröser Materialien.

## Revendications

1. Composition de revêtement avec une activité antimicrobienne et antisalinique sous forme de suspension aqueuse, **caractérisée en ce qu'**elle comprend des micro- et/ou nano-bâtonnets d'oxyde de zinc ZnO et de l'acide phosphocitrique.

2. Composition de revêtement selon la revendication 1, **caractérisée en ce qu'**elle comprend de 50 µg/ml à 20 mg/ml de micro-bâtonnets de ZnO et de 0,1 µg/ml à 2 mg/ml de nano-bâtonnets de ZnO et une solution aqueuse d'acide phosphocitrique présentant une concentration comprise entre 10⁻¹⁰ M et 10³ M.

3. Composition de revêtement selon la revendication 1, **caractérisée en ce que** les micro-bâtonnets de ZnO présentent une taille comprise entre 100 nm et 1 µm de diamètre et 1 µm et 10 µm de longueur, alors que les nano-bâtonnets de ZnO présentent une taille entre 15 nm et 100 nm de diamètre et 100 nm et 5 µm de longueur.

4. Procédé pour la préparation de la composition de revêtement selon la revendication 1, **caractérisé en ce qu'**une suspension aqueuse est préparée par dispersion de micro-bâtonnets d'oxyde de zinc et/ou de nano-bâtonnets d'oxyde de zinc dans une solution aqueuse contenant de l'acide phosphocitrique.

5. Procédé selon la revendication 4, **caractérisé par** la dispersion de 5 mg à 2 g de micro-bâtonnets de ZnO et/ou de 10 µg à 200 mg de nano-bâtonnets de ZnO dans 100 ml de solution aqueuse contenant de l'acide phosphocitrique en une concentration comprise entre 10⁻¹⁰ M et 10³ M.

6. Procédé selon la revendication 4, **caractérisé en ce que** la dispersion des micro-bâtonnets et/ou des nano-bâtonnets dans la solution aqueuse d'acide phosphocitrique est mise en œuvre à une température comprise entre 4 et 20 °C.

7. Utilisation de la composition selon la revendication 1 pour le traitement antimicrobien de matériaux poreux et non-poreux.

8. Utilisation de la composition selon la revendication 1 en tant qu'inhibiteur de la cristallisation saline sur des surfaces de matériaux poreux et non-poreux.
